(19)

Europäisches
Patentamt
European
Patent Office
Office européen
des brevets

(11) **EP 2 560 382 A2**

(12) **EUROPEAN PATENT APPLICATION**

(43) Date of publication:
   **20.02.2013 Bulletin 2013/08**

(21) Application number: **12180717.6**

(22) Date of filing: **16.08.2012**

(51) Int Cl.:
   **H04N 7/173** *(2011.01)*

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **16.08.2011 JP 2011178061**

(71) Applicant: **Konami Digital Entertainment Co., Ltd.
   Tokyo 107-8324 (JP)**

(72) Inventor: **Takehiro, Masashi
   Tokyo, 107-8324 (JP)**

(74) Representative: **Epping - Hermann - Fischer
   Patentanwaltsgesellschaft mbH
   Ridlerstrasse 55
   80339 München (DE)**

(54) **Game apparatus, control method for game apparatus, information recording medium, and program**

(57) A game apparatus (10) provides a game that, on the basis of a game history of a player, conditions an amount for the player to move a body part of the player, and thereby moves an object arranged in a virtual space. The object is related to a conditioning parameter and a position in the virtual space. The acceptor (12) detects a position of a predefined body part of the player in a real space. The obtainer (13) obtains a movement direction and a movement distance of the predefined body part from detected positions. The mover (14) moves the object in the movement direction on the basis of the obtained movement distance, the conditioning parameter, and the position of the object. The changer (16) changes the conditioning parameter depending on a history of the player.

FIG. 2A

EP 2 560 382 A2

**(Cont. next page)**

# FIG. 2B

**Description**

This application relates generally to a game apparatus, control method for the game apparatus, information recording medium, and program that can, on the basis of a game history of a player, condition an amount for the player to move a body part of the player.

There has been proposed a game in which a player uses a controller to operate a game character. For example, Patent Literature 1 discloses a game apparatus in which, on the basis of operation for a player to swing a controller provided with an acceleration sensor, a batting area and batting power at the time of batting a ball object are specified.

Patent Literature 1: Unexamined Japanese Patent Application Kokai Publication No. 2010-088563

Meanwhile, in a game in which a controller is used to provide an input as described above, when a player acquires proficiency in operation of the controller, the player can sometimes provide large acceleration with a slight motion to largely change an operation object. For example, even in the case of desiring to provide a game that requires a player to largely move the player's body or body parts, a motion of the player sometimes becomes gradually smaller. Accordingly, there is required a technique that, according to a proficiency level of a player, naturally conditions an amount for the players to move their bodies.

The present invention is one that solves a problem as described above, and relates to a game apparatus, control method for the game apparatus, information recording medium, and program that can, on the basis of a game history of a player, condition an amount for the player to move his or her body.

A game apparatus according to a first aspect of the present invention is a game apparatus that provides a game that moves an object arranged in a virtual space, and the game apparatus is provided with an acceptor, obtainer, mover, and changer, and configured as follows:

In the virtual space, various types of objects are arranged. For example, in a soccer game, in the virtual space, objects such as a ball, a character, and a goal are arranged. The game apparatus moves the object arranged in the virtual space to thereby proceed with the game.

The object is related to a conditioning parameter and a position in the virtual space, which are referred to by the mover and changer that will be described later.

The acceptor accepts a position of a predefined body part of a player in a real space.

The predefined body part of the player is, for example, a hand, a foot, a head, or the like of the player. The number of predefined body parts may be more than one such as the foot, head and the like of the player. In the real space, appearances of a player's body shape, clothing surface, and the like are obtained by a camera or a sensor to estimate a position of each body part through image recognition or the like, and thereby the predefined position of the player is detected by the game apparatus or another apparatus and the detected position of the player is accepted by the acceptor.

The obtainer obtains a movement direction and movement distance of the predefined body part from accepted positions.

The movement direction and movement distance of the predefined body part are obtained on the basis of the positions that are detected at regular timing intervals. The regular timing interval may be, for example, a vertical synchronization interrupt, or alternatively 1/30 seconds or 1/60 seconds.

The mover moves the object in the movement direction on the basis of the obtained movement distance, the conditioning parameter related to the object, and the position of the object in the virtual space.

In the present invention, when the predefined body part of the player moves in the real space, the corresponding object moves in the virtual space.

For example, when the head of the player moves in the real space, in the virtual space, a head of a game character moves. In this case, a movement distance of the head of the game character has a value obtained by correcting a movement distance of the head of the player in the real space with the conditioning parameter. For example, the movement distance of the head of the game character may have a value obtained by multiplying the movement distance of the head of the player in the real space by the conditioning parameter, or adding the conditioning parameter to the movement distance of the head of the player in the real space, or another value. Also, a movement direction of the head of the game character in the virtual space is coincident with the movement direction of the head of the player in the real space.

The changer changes the conditioning parameter related to the object, depending on a history of the player.

For example, if it turns out from the game history that the player has played a game many times for a long game sessions over a long period, it can be estimated that the player's experience level is high. For this reason, in the present invention, the conditioning parameter used for the correction is changed on the basis of the number of sessions, average play time, total play time, elapsed period from time of a first session to the present, or the like obtained from the history of the player.

For example, the conditioning parameter is changed such that as the number of sessions by the player increases, the movement distance of the object in the virtual space is made small relative to the movement distance of the predefined body part in the real space.

According to the present invention, depending on the experience level and the like of the player, the amount for the player to move his or her body can be conditioned.

Also, the game apparatus of the present invention is further provided with a memorizer and detector, and can be configured as follows:

That is, the memorizer memorizes the conditioning parameter and the position of the object. As the memorizer, a hard disk, RAM (Random Access Memory), memory card, or the like provided for the game apparatus itself may be used, or an external memory device connected through a computer network may be used.

On the other hand, the detector detects the position of the predefined body part of the player in the real space.

The detector is realized by a position sensor provided for the game apparatus, or the like. For example, by photographing the player with a camera to trace the body part, or by from acceleration or the like of a controller gripped by the player, obtaining the position by calculation, the position of the predefined body part of the player is detected.

Further, the acceptor accepts the position detected by the detector.

If an external device connected through the computer network detects the position of the predefined body part of the player, the acceptor accepts the position of the predefined body part through communication; however, in the present aspect, the detector that the game apparatus has functions as the acceptor.

The present invention relates to the above preferred embodiment of the invention, and as the game apparatus, any of various computers can be used.

Also, the game apparatus of the present invention can be configured as follows:

The mover determines the movement distance of the object in the virtual space by multiplying the movement distance by the conditioning parameter.

In general, as an experience level of a player increases, the player gets to know how the player moves his or her body is effective in determination in a game. For this reason, a player having a high experience level often makes a small body motion as compared with a beginner even in the case of performing the same operation.

For example, in the case of operating a ball by heading, as a player becomes more familiar with a game, a degree of head movement decreases to approach a limit to which a camera or sensor can detect the motion.

For this reason, by multiplying the movement distance of the head of the player in the real space by the conditioning parameter, the movement distance of the head of the game character in the virtual space is determined, and in addition, as the experience level of the player increases, the conditioning parameter is decreased, whereas the experience level of the player decreases, the conditioning parameter is increased.

By making a setting in this manner, in the case of attempting to move the head of the game character the same distance, a distance that an advanced player who is familiar with the game should move the head in the real space is increased.

That is, in the case where the experience level of the player is high, body and hand gestures can be made larger.

According to the present invention, by, depending on the experience level of the player, easily conditioning the amount for the player to move his or her body, regardless of the experience level of the player, the magnitude of a motion of the player is maintained, and thereby the player can be prevented from becoming too familiar with the game and therefore tired of the game, and in addition, handicapped depending on the experience level.

Also, the game apparatus of the present invention can be configured as follows:

The game apparatus is further provided with a determiner that, on the basis of the history, determines a performance of the player.

For example, on the basis of the history such as scores, the number of sessions, and/or the like, of the game, a level of the player is comprehensively determined.

Then, the changer changes the conditioning parameter on the basis of the determined performance.

A range where the conditioning parameter can be changed is typically set to a constant range. This is to prevent a motion of the player and a motion of the character in the game from becoming quite different from each other. For example, the changer changes the conditioning parameter in the range more than 0.0 and less than 2.0.

In addition, in the case where the player is an advanced player, even if the player fails in play to reduce a score, the conditioning parameter may be kept at a low value. That is, in the case where the player is an advanced player, a motion of the player is evaluated low, and therefore the player should move the body of the player more. On the other hand, in the case where the player is a beginner, even if the player succeeds in play to increase a score, the conditioning parameter may be kept at a high value. That is, in the case where the player is a beginner, a motion of the player is evaluated highly, and therefore the player is not required to move the body of the player greatly.

According to the present invention, depending on a level of the player, a difficulty level of the game can be easily conditioned.

Also, the game apparatus of the present invention can be configured as follows:

That is, the present invention can also be applied to, in addition to a configuration in which one player plays alone, and a configuration in which one player competes with a computer, a configuration in which two or more players compete with one another. That is, this is the case where, for example, in a tennis game, soccer game, or the like, a plurality of players competitively play. In this case, by recognizing a face of each of the players, the plurality of players can also be distinguished to proceed with the game.

The memorizer memorizes a performance parameter for each of the plurality of players.

As the performance parameter, for example a score in the game currently in play may be used, or a level of real ability, or the like, obtained from a past play history may be employed. In the case of the soccer game, as the performance parameter, scores having been obtained so far by a team operated by the player, or the like, can also be employed.

Further, the changer changes a conditioning parameter for each of the player on the basis of a performance parameter memorized in the memorizer. Note that as in the above-described invention, a range of the change of the conditioning parameter is typically provided with a lower limit and an upper limit.

By comparing performance parameters with each other, relative merits of players are determined. In the case where a winning percentage, obtained scores, or average score in past competitions, a score obtained during a current play, or the like is set as the performance parameter, a greater value means being superior as a player, whereas a lesser value means being inferior as a player.

Accordingly, on the basis of determined win/loss status of the players, a conditioning parameter for a inferior player is increased, whereas a conditioning parameter for a superior player is decreased, so that in order for the superior player to move a game character to the same extent as that for the inferior player, the superior player should make a larger motion.

For example, in the case where a player who is an advanced player competes with a player who is a beginner, the advanced player should exaggerate body and hand gestures as compared with the beginner, and therefore even if there is a difference in real ability, heated competition development is expected.

According to the present invention, in the case where a plurality of players competes with one another, the game can be proceeded with so as to achieve a balanced match.

A control method according to another aspect of the present invention is a control method that is performed by a game apparatus that provides a game that moves an object arranged in a virtual space, and configured to be provided with:

an accepting step of accepting a position of a predefined body part of a player in a real space;
an obtaining step of, from the accepted position, obtaining a movement direction and a movement distance of the predefined body part;
a movement step of, on the basis of the obtained movement distance, a conditioning parameter for the object, and a position of the object in the virtual space, moving the object in the movement direction; and
a changing step of changing the conditioning parameter for the object depending on a history of the player.

An information recording medium according to another aspect of the present invention is a non-transitory information recording medium that records a program for instructing a computer to provide a game that moves an object arranged in a virtual space, wherein
the program is configured to instruct the computer to function as:

an acceptor that accepts a position of a predefined body part of a player in a real space;
an obtainer that, from the accepted position, obtains a movement direction and a movement distance of the predefined body part;
a mover that, on the basis of the obtained movement distance, a conditioning parameter for the object, and a position of the object in the virtual space, moves the object in the movement direction; and
a changer that changes the conditioning parameter for the object depending on a history of the player.

A program according to aspect of the present invention is a program for instructing a computer to provide a game that moves an object arranged in a virtual space, and the program is recorded in a non-transitory information recording medium and configured to instruct the computer to function as:

an acceptor that accepts a position of a predefined body part of a player in a real space;
an obtainer that, from the accepted position, obtains a movement direction and a movement distance of the predefined body part;
a mover that, on the basis of the obtained movement distance, a conditioning parameter for the object, and a position of the object in the virtual space, moves the object in the movement direction; and
a changer that changes the conditioning parameter for the object depending on a history of the player.

Also, the program of the present invention can be recorded in a computer-readable non-transitory information recording medium such as a compact disk, flexible disk, hard disk, magnetooptical disk, digital video disk, magnetic tape, semiconductor memory or the like. The program is loaded into a temporary memory medium such as an RAM and then executed.

The above program can be, independently of a computer that executes the program, distributed and/or sold through a transitory medium such as a communication line of a computer network. Also, the above information recording medium can be, independently of a computer, distributed and/or sold.

According to the present invention, a game device, control method for the game device, information recording medium, and program that can, on the basis of a game history of a player, condition an amount for the player to move a body of the player can be provided.

A more complete understanding of this application can be obtained when the following detailed description is considered in conjunction with the following drawings, in which:

FIG. 1 is a diagram illustrating a schematic configuration of a game apparatus of the present invention;
FIG. 2A is a diagram illustrating a schematic configuration of a typical information processor that realizes the game apparatus of the present invention;
FIG. 2B is a diagram schematically illustrating an appearance of the information processor;
FIG. 3 is a schematic diagram illustrating an example of a game image;
FIG. 4 is a diagram for explaining a functional configuration of the game apparatus;
FIG. 5 is a diagram illustrating an example of a relationship between a player and a detector in a real space;
FIG. 6A is a diagram illustrating a situation where a head of the player moves;
FIG. 6B is a diagram illustrating a movement distance of a head of a character object in the case where the player is a beginner;
FIG. 6C is a diagram illustrating a movement distance of the head of the character object in the case where the player is an advanced player;
FIG. 7 is a diagram illustrating a situation of a change in conditioning parameter $\alpha$ in a first embodiment;
FIG. 8 is a flowchart for explaining a game control process in a single game;
FIG. 9A is a flowchart illustrating details of a change process of the conditioning parameter $\alpha$ in the first embodiment;
FIG. 9B is a flowchart illustrating details of a change process of the conditioning parameter $\alpha$ in the first embodiment;
FIG. 10 is a schematic diagram illustrating an example of a game image in a second embodiment;
FIG. 11 is a diagram for explaining a functional configuration of a game apparatus in the second embodiment;
FIG. 12A is a diagram illustrating situations where heads of two players move;
FIG. 12B is a diagram illustrating movement distances of heads of character objects corresponding to the two players;
FIG. 13 is a flowchart for explaining a game control process in one game in the second embodiment.;
FIG. 14 is a flowchart illustrating details of a change process of a conditioning parameter for a player 1;
FIG. 15A is a diagram illustrating an example of a situation of a change in conditioning parameter $\alpha$ in a variation;
FIG. 15B is a diagram illustrating an example of a situation of a change in conditioning parameter $\alpha$ in a variation;
FIG. 15C is a diagram illustrating an example of a situation of a change in conditioning parameter $\alpha$ in a variation; and
FIG. 16 is a flowchart illustrating details of a change process of conditioning parameters in the case where the number of players is three or more.

Embodiments of the present invention will be described. In the following, to facilitate understanding, an information processor for game use is used to describe the embodiments that realize the present invention; however, the following embodiments are only for the purpose of description but do not limit the scope of the present invention. Accordingly, one having ordinary skill in the art can employ embodiments in which each or all of elements of the embodiments are replaced by equivalents to the elements; however, such embodiments are also included in the scope of present invention.

First embodiment

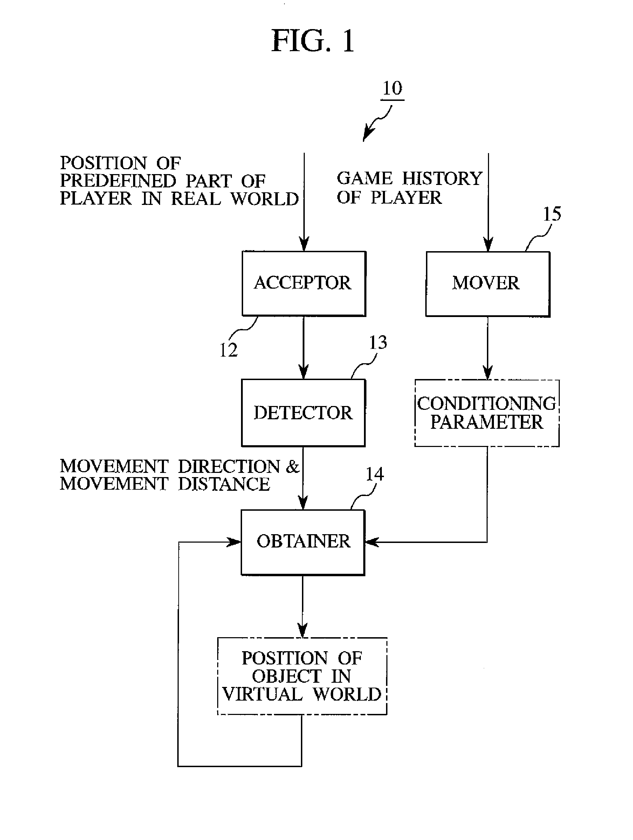

FIG. 1 is an explanatory diagram illustrating a schematic configuration of a game apparatus of the present invention. In the following, with reference to the diagram, a description is provided.

The game apparatus 10 provides a game that moves an object arranged in a virtual space.

In the virtual space, various types of objects are arranged. For example, in a soccer game, objects such as a ball, character, and goal are arranged in the virtual space. The game apparatus 10 proceeds with the game by moving the object arranged in the virtual space. The object is related to a conditioning parameter and a position in the virtual space.

The game apparatus 10 is provided with an acceptor 12, detector 13, obtainer14, mover 15, and changer 16.

The acceptor 12 accepts a position of a predefined body part of a player in a real space.

The predefined body part of the player refers to, for example, a hand, foot, head, or the like of the player. The number of predefined body parts may be more than one, such as using both of the foot and the head of the player that is limited to one person.

In the real space, appearances of a player's body shape, clothes surface, and the like are obtained by the detector such as a camera or a sensor to estimate a position of each body part through image recognition or the like, and thereby the position of the predefined body part of the player is detected. The acceptor 12 accepts a result of the detection. That is, the detector may function as the acceptor 12 itself, or the result obtained by the detector may be subjected to a calculation process, and then the acceptor 12 may accept the position of the predefined body part.

Also, in the case where a terminal device that a user uses in order to accept provision of the game is communicably connected to a server device that realizes the game apparatus 10, and a sensor or the like is prepared in the terminal device, the acceptor 12 accepts, through a computer network, the position of the predefined body part transmitted from the terminal device.

On the other hand, the obtainer 13 obtains a movement direction and a movement distance of the predefined body part from detected positions.

On the basis of the positions detected at regular timing intervals, the movement direction and the movement distance of the predefined body part are obtained. The regular timing interval can be set to, for example, a vertical synchronization interrupt (1/30 seconds or 1/60 seconds); however, depending on hardware performance or calculation load of the game apparatus 10, the regular timing interval can be appropriately set.

The mover 14 moves the object in the movement direction on the basis of the obtained movement distance, the conditioning parameter related to the object, and the position of the object in the virtual space.

In the present embodiment, when the predefined body part of the player moves in the real space, the corresponding object moves in the virtual space.

For example, when the head of the player moves in the real space, a head of a game character moves in the virtual space. In this case, a movement distance of the head of the game character has a value obtained by correcting a movement distance of the head of the player in the real space with the conditioning parameter.

For example, the movement distance of the head of the game character may have a value obtained by multiplying the movement distance of the head of the player in the real space by the conditioning parameter, or adding the conditioning parameter to the movement distance of the head of the player in the real space, or another value. Also, a movement direction of the head of the game character in the virtual space is coincident with a movement direction of the head of the player in the real space.

The changer 15 changes the conditioning parameter related to the object depending on a history of each individual player.

For example, if it turns out from a given player's game history that the player has played the game many times and over a long period, it can be estimated that an experience level of the player is high.

Therefore, in the present embodiment, the conditioning parameter used for the correction is changed on the basis of the number of game sessions, average play time, total play time, or elapsed period from time of a first game session to the present and the like, which is obtained from the player's history.

For example, the conditioning parameter is changed such that as the number of plays by the player increases, the movement distance of the object in the virtual space is made small relative to the movement distance of the predefined body part in the real space.

As described, according to the present embodiment, an amount for the player to move a body part of the player can be conditioned depending on the experience level of the player, or the like.

Note that, in the present embodiment, the conditioning parameter and the position of the object are referred to in various types of processes, and these pieces of information are memorized in a memorizer. As the memorizer, a hard disk, RAM (Random Access Memory), memory card, or the like that the game apparatus itself is provided with may be used, or an external memory device connected through the computer network may be used.

In an aspect where a user uses a terminal device, and a server device functions as the game apparatus 10, as the memorizer, a hard disk, RAM, or the like in the server device may be used, a memory card or the like connected to the terminal device may be used, or any of various types of network storages or the like can be used.

In the following, an embodiment in which a terminal device used by a user functions as the game apparatus 10, in particular, an embodiment in which the game apparatus 10 is provided with the detector and the memorizer is described; however, by appropriately dispersing and arranging respective parts in an embodiment cited below in the terminal device and the server device, and making the respective parts communicate with one another, the game apparatus 10 can also be realized.

Second embodiment

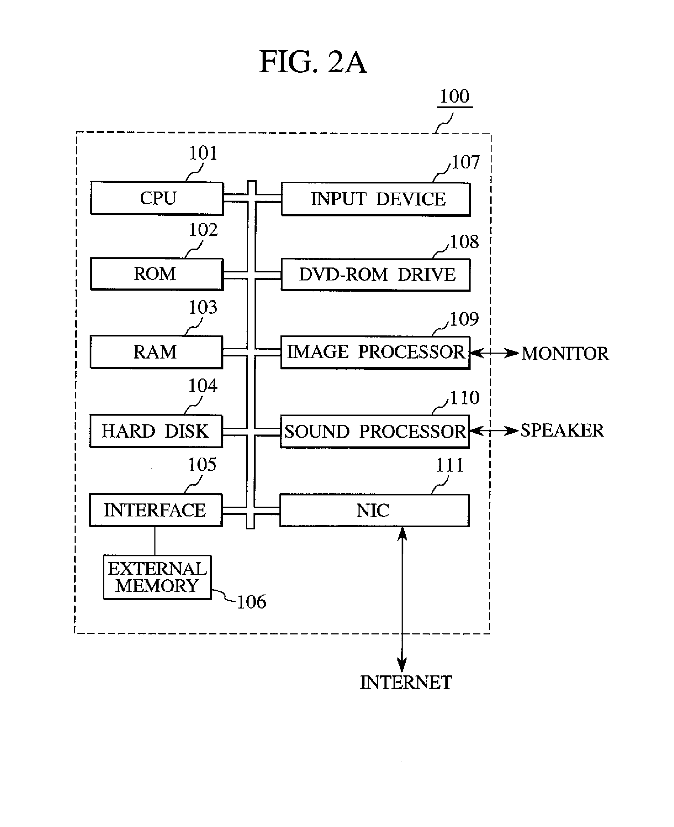

FIG. 2A is a schematic diagram illustrating a schematic configuration of a typical information processor 100 that fulfills functions of the game apparatus of the present invention.

The information processor 100 is provided with a CPU (Central Processing Unit) 101, ROM (Read Only Memory) 102, RAM (Random Access Memory) 103, hard disk 104, interface 105, external memory 106, input device 107, DVD-ROM (Digital Versatile Disk - Read Only Memory) drive 108, image processor 109, sound processor 110, and NIC (Network Interface Card) 111.

By loading a DVD-ROM that memorizes a program and data for a game into the DVD-ROM drive 108, and powering on the information processor 100, the program is executed and a game apparatus of the present embodiment is realized.

The CPU 101 controls operation of the whole of the information processor 100, and is connected to each of the components to transceive a control signal or data. Also, the CPU 101 can use an ALU (Arithmetic Logic Unit) (not illustrated) to perform arithmetic operations such as addition, subtraction, multiplication, and division of pieces of data memorized in a high speed accessible memory area called a register, logic operations such as logical addition, logical multiplication, and logical negation, bit operations such as bit addition, bit multiplication, bit inversion, bit shift, and bit rotation, and other operations. Further, the CPU 101 is provided with a coprocessor that can perform, at high speed, saturation operations such as addition, subtraction, multiplication and division, vector operations such as trigonometric functions, and the like for dealing with multimedia processing.

In the ROM 102, an IPL (Initial Program Loader) that is performed immediately after the power-on is recorded. The IPL is executed by the CPU 101, and thereby the program recorded in the DVD-ROM is read into the RAM 103 to start an activation process by the CPU 101.

The RAM 103 is one that is intended to temporarily memorize data and program, and for example, retains the program and data read from the DVD-ROM, and in addition, pieces of data necessary for progress of the game and chat communication. Also, the CPU 101 performs processes such as providing the RAM 103 with a variable area, and making the ALU directly act on a value stored in the variable area to perform an operation; and once storing, in the register, a value stored in the RAM 103 to perform an operation on the register, and writing back a result of the operation in the memory.

The hard disk 104 stores a program for an operating system (OS) necessary for operation control of the whole of the information processor 100, various pieces of game data, and the like. The CPU 101 can rewrite information memorized in the hard disk 104 at any time.

In the external memory 106 that is detachably connected through the interface 105, pieces of data indicating play situations (past performances, and the like) of the game, data indicating a progress state of the game, pieces of data on logs (records) of communication with another device through a network, and the like are memorized. The CPU 101 can rewrite information memorized in the external memory 106 at any time. Also, the information processor 100 can be connected with an additional hard disk through the interface 105.

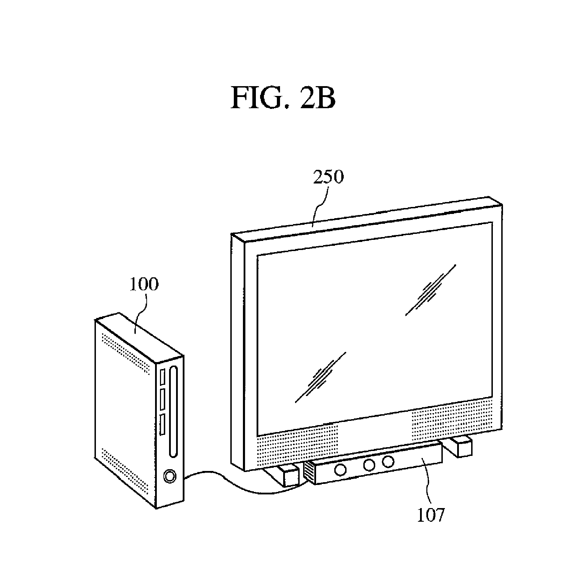

The input device 107 is, as illustrated in FIG. 2B, placed near a monitor 250 on which a game screen is displayed. The input device 107 is provided with a camera that photographs a situation of a player, and the like. The CPU 101 analyzes image data representing an image photographed by the camera, and determines a body part of the player (e.g., player's hand, foot, face, or the like) included in the image. Methods for the image analysis include, for example, an analysis based on pattern recognition, an analysis based on extraction of a feature point, an analysis based on calculation of a space frequency, and other analyses. The photographing by the camera is continuously performed during the game.

Also, the input device 107 is provided with a depth sensor that measures a distance from the input device 107 to the player (or any body part of the player). For example, the input device 107 radiates infrared around, and detects a reflected wave of the infrared. Then, the input device 107 obtains a distance (hereinafter also referred to as a "depth") from a transmission port of the radiated wave to an object that reflects the radiated wave, on the basis of a phase difference between the radiated wave and the reflected wave, or a period of time (transmit time) from the transmission of the infrared to the detection of the reflected light. The detection of the depth by the depth sensor is repeatedly performed at predetermined time intervals toward each of directions in which the infrared can be transmitted.

By providing the depth sensor, the information processor 100 can more specifically grasp a three-dimensional position and shape of an object arranged in the real space. Specifically, for example, it is assumed that the CPU 101 makes an image analysis of first image data obtained at first time and second image data obtained at second time, and as a result, determines that both of the first image data and the second image data include a body part representing, for example, the head of the player. From a change between a position of the head in the first image data and a position of the head in the second image data, the CPU 101 can determine which direction of up, down, left, and right and how far the head of the player has moved in as viewed from the camera, and in addition, from a change between a depth of the head in the first image data and a depth of the head in the second image data, can also determine which direction of front or back and how far the head of the player has moved in as viewed from the camera (to what extent the head has come close to the camera or moved away from the camera).

As described, the CPU 101 can digitalize and capture a three-dimensional movement of the player in the real space as in so-called motion capture on the basis of images photographed by the camera provided for the input device 107 and a distance (depths) measured by the depth sensor provided for the input device 107.

For example, in the case where in a soccer game, in front of the monitor screen 250 (i.e., in front of the input device 107), the player makes a motion of catching a ball as a goalkeeper, the CPU 101 can recognize that the player has made the motion of catching the ball. Then, the CPU 101 can proceeds with the game depending on the recognized motion. That is, the player freely moves a body part of the player, and thereby without having a touch pad type controller or the like, can input a desired instruction. The input device 107 plays a role as a so-called "controller" that accepts instruction input from the player.

Digital image data representing photographed image is a collection of a plurality of pixels. Typically, each of the pixels is related with a value representing intensity of any of three primary colors (R, G, B). The fact that a depth in each of the directions is measured by the image depth sensor means that one pixel is substantially represented by, in addition to red (R), green(G), and blue (B), using additional one dimension that is a depth (D).

In a DVD-ROM to be loaded into the DVD-ROM drive 108, a program for realizing the game, and pieces of image data and pieces of sound data associated with the game are preliminarily recorded. The DVD-ROM drive 108 reads the program and pieces of data recorded in the loaded DVD-ROM according to control by the CPU 101. The CPU 101 temporarily memorizes the read program and pieces of data in the RAM 103 or the like.

The image processor 109 processes data, which is read from the DVD-ROM, with an image operation processor (not illustrated) provided for the CPU 101 or the image processor 109, and then records the processed data in a frame memory (not illustrated) provided for the image processor 109. The image information recorded in the frame memory is converted to a video signal at predefined synchronizing timing, which is then outputted to the monitor 250 connected to the image processor 109.

The image operation processor can perform a superimposing operation of two-dimensional images, transmission operations such as $\alpha$ blending, and various types of saturation operations at high speed. Further, the image operation processor can also perform a high speed operation that uses a Z-buffer method to render information on polygon that is arranged in a virtual three-dimensional space and added with various pieces of texture information, and obtain a rendering image that overlooks the polygon arranged in the virtual three-dimensional space from a predefined viewpoint position toward a predefined eye direction.

Further, the CPU 101 and the image operation processor cooperatively operate, and thereby, according to font information that defines a character shape, a character string can be drawn in the frame memory as a two-dimensional image, or drawn on a surface of each polygon.

Also, the CPU 101 and the image operation processor write, in the frame memory, image data preliminarily stored in the DVD-ROM, and thereby a situation of the game or the like can be displayed on the screen. By at regular timing intervals (typically, vertical synchronization interrupt (VSYNC) timing), repeatedly performing a process of writing image data in the frame memory and displaying the image data, an animation can be displayed on the monitor 250.

The sound processor 110 converts sound data read from the DVD-ROM into an analog sound signal, and outputs the analog sound signal from a speaker. Also, under control of the CPU 101, the sound processor 110 generates pieces of sound data such as sound effects and pieces of music to be generated during progress of the game, and decodes the pieces of generated sound data to thereby output various sounds from the speaker.

If any of the pieces of sound data recorded in the DVD-ROM is MIDI data, the sound processor 110 refers to sound source data that the sound processor has, and converts the MIDI data to PCM data. Also, if any of the pieces of sound data is compressed into an ADPCM (Adaptive Differential Pulse Code Modulation) format, or an Ogg Vorbis format, the sound processor 110 converts the compressed sound data to PCM data. The PCM data can be outputted as a sound by being D/A (Digital/Analog) converted at timing according to a sampling frequency and outputted to the speaker.

The NIC 111 connects the information processor 100 to a computer network such as the Internet. The NIC 111 is one conforming to the 10 BASE-T/100 BASE-T standard used to constitute an LAN (Local Area Network), or one including an analog modem for using a telephone line to make a connection to the Internet, an ISDN (Integrated Services Digital Network) modem, ADSL (Asymmetric Digital Subscriber Line) modem, cable modem for using a cable TV line to make a connection to the Internet, or the like, and an interface (not illustrated) that acts as a go-between such a modem and the CPU 101.

The game that is realized by the information processor 100 having the above configuration and performed in the game apparatus of the present embodiment is a soccer game. A player moves the head of the player as in so-called heading in order to block a ball from entering a goal as a goalkeeper. To facilitate understanding, one kick in a so-called penalty shootout is defined as one game. Note that the present invention is not limited to the soccer game but can be applied to a game apparatus that can perform various types of games such as a baseball game, track and field games and the like.

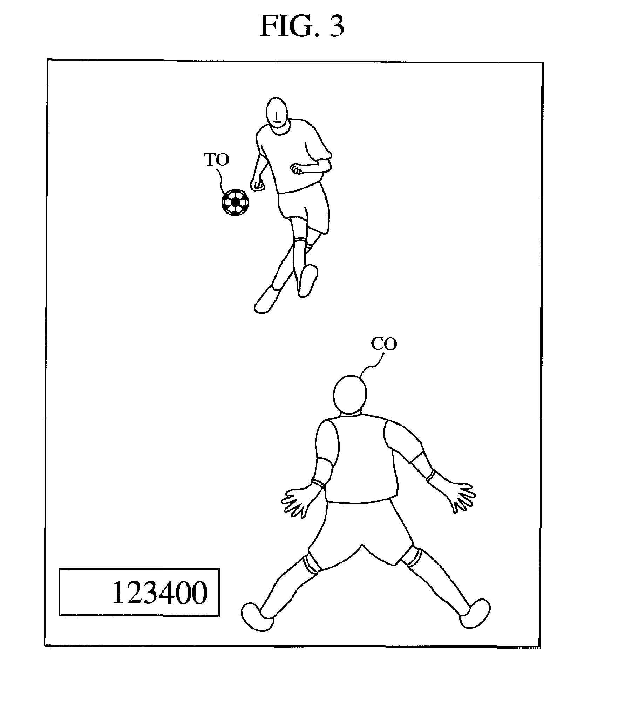

FIG. 3 illustrates an example of a game image in the present embodiment.

In this game image, a target object TO acting as the ball moves toward a lower part of a screen. Also, a head of a character object CO acting as the goalkeeper moves along with a movement of the head of the player in the real space. In the present embodiment, it is assumed that in the case where the target object TO comes into contact with the head of the character object CO acting as the goalkeeper, a score of the player is added.

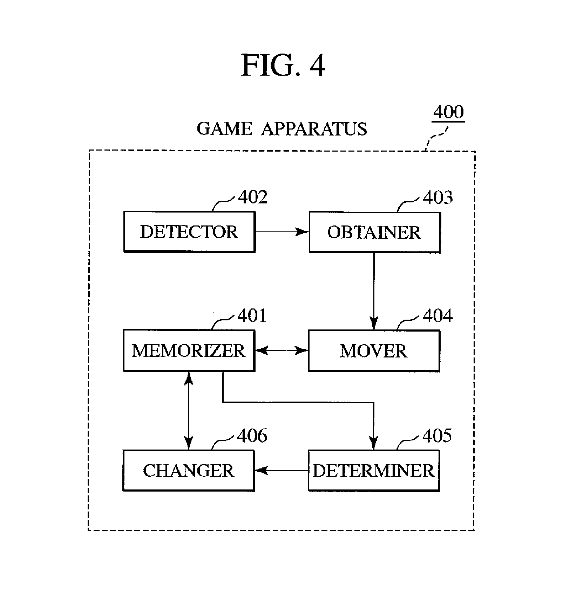

Next, with reference to FIG. 4, described is a functional configuration and the like of the game apparatus 400 of the present embodiment, which is realized by the information processor 100 having the above configuration.

FIG. 4 is a diagram illustrating the functional configuration of the game apparatus 400. The game apparatus 400 is provided with a memorizer 401, detector 402, obtainer 403, mover 404, determiner 405, and changer 406. In the following, the game apparatus 400 of the present embodiment is outlined.

In the memorizer 401, a conditioning parameter $\alpha$ and positions of the various types of objects are memorized.

The detector 402 detects a position of the head of the player in real space, and functions as the acceptor 12 in the first embodiment.

The obtainer 403 obtains a movement direction and movement distance of the head of the player from positions detected by the detector 402, and functions as the obtainer 13 in the first embodiment.

The mover 404 moves the head of the character object CO in the movement direction of the head of the player on the basis of the movement distance obtained by the obtainer 403 and the conditioning parameter and positions of the various types of objects memorized in the memorizer 401, and functions as the mover 14 in the first embodiment.

The determiner 405 determines a performance of the player on the basis of a game history of the player, and functions as the determiner 15 in the first embodiment.

The changer 406 changes the conditioning parameter $\alpha$ memorized in the memorizer 401 depending on the game history of the player or a result of the performance determination by the determiner 405, and functions as the changer 16 in the first embodiment.

In the following, the respective parts of the game apparatus 400 of the present embodiment are described in detail.

First, the memorizer 401 memorizes a position of the target object TO, a position of the character object CO, and the after-mentioned conditioning parameter $\alpha$. Although details are described later, the changer 406 changes the conditioning parameter $\alpha$ such that a motion of a beginner is evaluated largely, and a motion of an advanced player is evaluated small. Then, the mover 404 moves the head of the character object CO on the basis of the conditioning parameter $\alpha$.

Further, in the memorizer 401, a score of the player may be memorized.

The memorizer 401 is realized by the RAM 103, external memory 106, or the like.

The detector 402 detects a position of a predefined body part of the player in the real space. In the present embodiment, the predefined body part is the head of the player. Note that the detector 402 can recognize a skeletal structure of the player, and therefore the predefined body part in the present invention is not limited to the head but may be any body part such as an arm, hand, leg, or foot of the player. Also, the number of predefined body parts may be more than one, and for example, may be a whole body of the player.

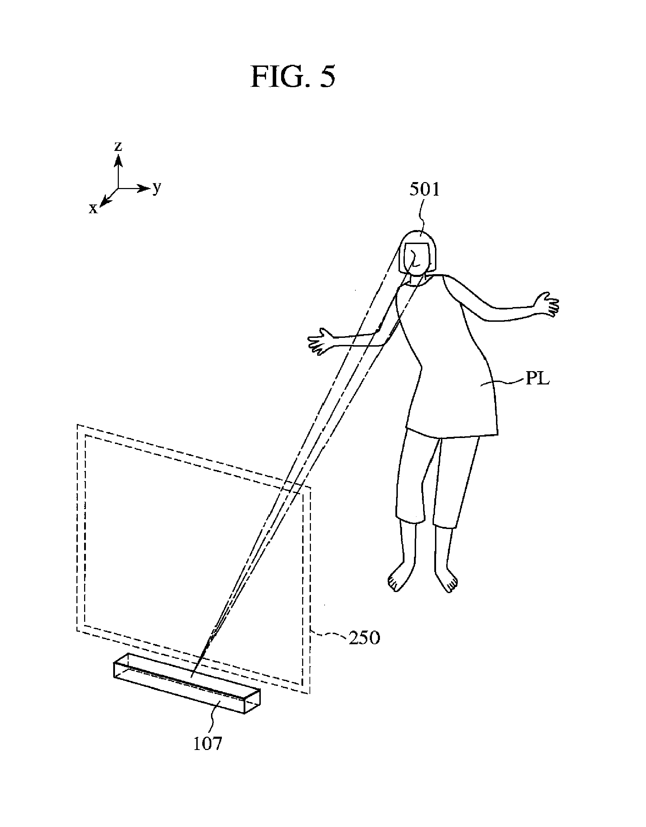

FIG. 5 illustrates the head 501 of the player PL and the input device 107 in the real space.

The input device 107 obtains image data on the player PL at the regular timing intervals. The regular timing interval is typically a vertical synchronization interrupt. Also, the input device 107 measures a depth of the head 501 of the player PL. The depth refers to a distance from an infrared transmission port provided for the input device 107 to the head 501 of the player PL. The CPU 101 detects a position of the head 501 of the player PL on the basis of an image analysis result of the image data and the depth of the head 501 of the player PL obtained by the input device 107.

The position of the head 501 of the player PL is represented by coordinate values in a coordinate system (in the present embodiment, a Cartesian coordinate system) defined in the real space. Note that the coordinate system in the real space in the present invention is not limited to the Cartesian coordinate system but may be a polar coordinate system.

The detector 402 is realized by cooperative operation of the CPU 101 and the input device 107.

Returning to FIG. 4, the obtainer 403 obtains the movement direction and movement distance of the head 501 of the player PL on the basis of the positions detected by the detector 402 at the regular timing intervals.

At the time of obtaining the movement direction and movement distance of the head 501 of the player PL, the obtainer 403 obtains a displacement vector $\Delta P_{re}(t)$ of the head 501 of the player PL at time t.

Note that, in the present embodiment, the time t is represented by an integer value based on the vertical synchronization interrupt or an integral multiple of it.

Assuming that time prior to the time t by the regular timing interval is t-1, a position vector $P_{re}(t)$ of the head 501 of the player PL at the time t is (X(t), Y(t), Z(t)), and a position vector $P_{re}(t-1)$ of the head 501 of the player PL at the time t-1 is (X(t-1), Y(t-1), Z(t-1)), the displacement vector $\Delta P_{re}(t)$ is expressed by the following expression:

$$\Delta P_{re}(t) = (X(t) - X(t\text{-}1), Y(t) - Y(t\text{-}1), Z(t) - Z(t\text{-}1)) \qquad (1),$$

where $\Delta P_{re}(t)$: the displacement vector of the head of the player PL at the time t;
X(t): an X coordinate of the head of the player PL at the time t;
Y(t): a Y coordinate of the head of the player PL at the time t;
Z(t): a Z coordinate of the head of the player PL at the time t;
X(t-1): an X coordinate of the head of the player PL at the time t-1;
Y(t-1): a Y coordinate of the head of the player PL at the time t-1; and
Z(t-1): a Z coordinate of the head of the player PL at the time t-1.

The movement distance of the head 501 of the player PL is represented by the magnitude of the displacement vector $\Delta P_{re}(t)$ of the head 501 of the player PL. Also, the movement direction is represented by a direction of the displacement vector $\Delta P_{re}(t)$ of the head 501 of the player PL.

The obtainer 403 is realized by the CPU 101.

The mover 404 moves the head of the character object CO in the direction of the displacement vector $\Delta P_{re}(t)$ on the basis of the conditioning parameter $\alpha$ at the time t memorized in the memorizer 401, and a position vector $P_{vi}(t)$ of the head 501 of the character object CO memorized in the memorizer 401. The conditioning parameter $\alpha$ is used at the time of obtaining a displacement vector $\Delta P_{vi}(t)$ of the head of the character object CO.

Regarding a change mode of the conditioning parameter $\alpha$, although will be described later, the conditioning parameter $\alpha$ is typically determined such that in the case where the player is a beginner, $\Delta P_{vi}(t)$ is made large relative to $\Delta P_{re}(t)$, whereas in the case where the player is an advanced player, $\Delta P_{vi}(t)$ is made small relative to $\Delta P_{re}(t)$.

A position of the head of the character object CO is represented by coordinate values in a coordinate system (in the present embodiment, a Cartesian coordinate system) defined in the virtual space. Accordingly, in the following, the position vector representing the position of the head of the character object CO at a certain time t is defined as $P_{vi}(t)$. Note that the coordinate system in the virtual space in the present invention is not limited to the Cartesian coordinate system but may be a polar coordinate system or the like.

A relationship among the conditioning parameter $\alpha$, the position vector $P_{vi}(t)$ of the head of the character object CO at the time t, a position vector $P_{vi}(t\text{-}1)$ at time t-1, and the displacement vector $\Delta P_{re}(t)$ of the head 501 of the player PL at the time t is, in the present embodiment, expressed by the following expression:

$$P_{vi}(t) = P_{vi}(t\text{-}1) + \alpha \cdot \Delta P_{re}(t) \qquad (2),$$

where $P_{vi}(t)$: the position vector of the head of the character object CO at the time t;
$P_{vi}(t\text{-}1)$: the position vector of the head of the character object CO at the time t-1;
$\alpha$: the conditioning parameter; and
$\Delta P_{re}(t)$: the displacement vector of the head 501 of the player PL at the time t.

Accordingly, a relationship among the conditioning parameter $\alpha$, the displacement vector $\Delta P_{vi}(t)$ of the head of the character object CO, and the displacement vector $\Delta P_{re}(t)$ of the head 501 of the player PL at the time t is, in the present embodiment, expressed by the following expression:

$$\Delta P_{vi}(t) = \alpha \cdot \Delta P_{re}(t) \qquad (3),$$

where $\Delta P_{vi}(t)$: the displacement vector of the head of the character object CO at the time t;
$\alpha$: the conditioning parameter; and
$\Delta P_{re}(t)$: the displacement vector of the head 501 of the player PL at the time t.

That is, in the present embodiment, the conditioning parameter $\alpha$ functions as a coefficient for the displacement vector $\Delta P_{re}(t)$ to obtain the displacement vector $\Delta P_{vi}(t)$. However, as described above, the conditioning parameter $\alpha$ is also a variable that changes depending on a play history.

Note that a method for calculating $\Delta P_{vi}(t)$ in the present invention is not limited to the above-described one but may be any method as long as the method is based on the conditioning parameter $\alpha$.

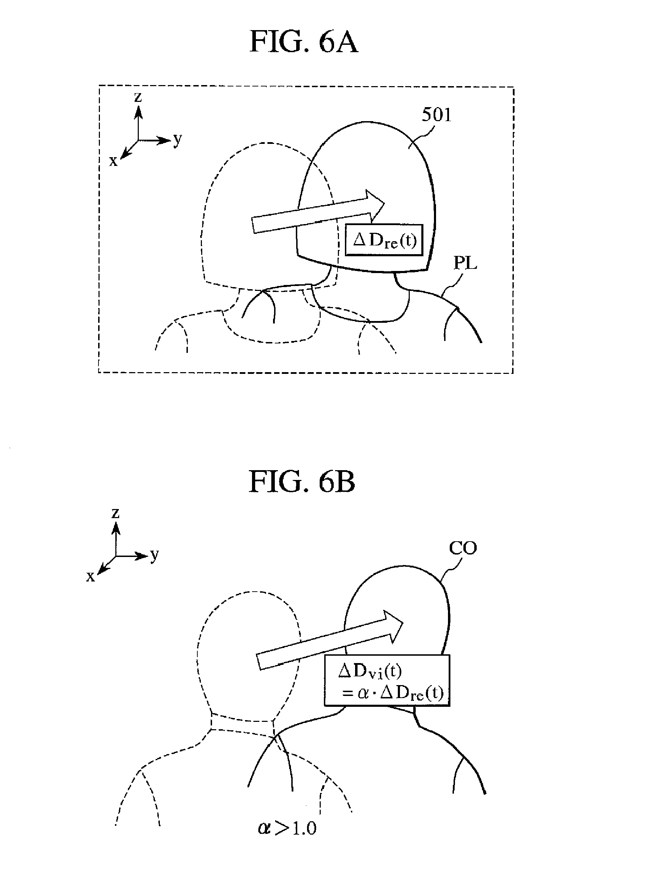

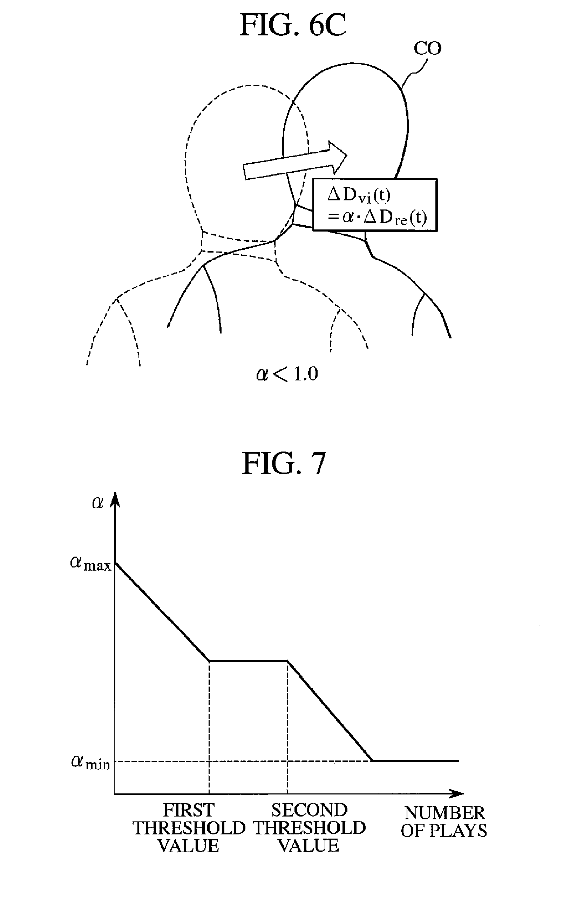

FIG. 6A illustrates a situation of a movement of the head of the player PL. FIG. 6B illustrates a situation of a movement of the head of the character in the case where the player PL is a beginner. FIG. 6C illustrates a situation of a movement of the head of the character in the case where the player PL is an advanced player.

The player PL visually recognizes a movement of the ball acting as the target object, and moves his or her head 501 toward the ball. As illustrated in FIG. 6A, the magnitude of the displacement vector $\Delta P_{re}(t)$ of the head 501 of the player PL in the real space is $\Delta D_{re}(t)$, and therefore the player has moved the head 501 a distance $\Delta D_{re}(t)$.

Also, as illustrated in FIG. 6B or 6C, in the present embodiment, the magnitude $\Delta D_{vi}(t)$ of the displacement vector $\Delta P_{vi}(t)$ of the character object CO in the virtual space is represented by multiplying the conditioning parameter $\alpha$ by $\Delta D_{re}(t)$, and therefore the displacement vector $\Delta P_{re}(t)$ of the head of the player PL and the displacement vector $\Delta P_{vi}(t)$ of the head of the character object face in the same direction.

In the present embodiment, in the case where the player PL is a beginner, the conditioning parameter $\alpha$ is set to be greater than 1.0, whereas in the case where the player PL is an advanced player, the conditioning parameter $\alpha$ is set to be less than 1.0.

Accordingly, in the case where the player PL in the real space illustrated in FIG. 6A is a beginner, as compared with the magnitude $\Delta D_{re}(t)$ of the displacement vector of the player, the magnitude $\Delta D_{vi}$ of the displacement vector of the character object CO is large in the virtual space as illustrated in FIG. 6B.

On the other hand, in the case where the player PL in the real space illustrated in FIG. 6A is an advanced player, as compared with the magnitude $\Delta D_{re}(t)$ of the displacement vector of the player, the magnitude $\Delta D_{vi}(t)$ of the displacement vector of the character object CO is less in the virtual space as illustrated in FIG. 6C.

Also, when comparing FIG. 6B and FIG. 6C with each other, in the case where the beginner and the advanced player take the same action, a motion of the character of the beginner is larger than that of the advanced player.

As described, in the present embodiment, a motion of the beginner player is evaluated greatly, whereas a motion of the advanced player is evaluated small, which is reflected in the motion of the character.

To facilitate understanding, in the above description, the description is provided with the player being classified into one of two categories, i.e., either as an advanced player or a beginner; however, in general, the conditioning parameter $\alpha$ can be finely set depending on a proficiency level of the game, or the like.

The mover 404 is realized by the CPU 101.

Returning to FIG. 4, the determiner 405 determines a performance of the player PL on the basis of a history of the player PL. For example, on the basis of the number of plays by the player PL, an average value of scores per one game by the player, or the like, the determiner 405 comprehensively determines whether or not the player PL is classed as a beginner or an advanced player.

For example, even in the case of a player having a small number of plays, if an average value of a score is high, the determiner 405 determines that the player is an advanced player. Also, even in the case of a player having a large number of plays, if an average value of a score is low, the determiner 405 determines that the player is a beginner.

To facilitate understanding, in the above description, the description is provided with the player being classified into the two categories, i.e., the advanced player and the beginner; however, in general, the conditioning parameter $\alpha$ can be finely set depending on the proficiency level of the game, or the like. As the simplest case, there is a method that, assuming that an average score of some player is Sp and an average score of all players is $S_{all}$, sets the conditioning parameter $\alpha$ for the some player as $\alpha = S_p/S_{all}$. Besides, a method such as setting $\alpha$ for each score in a multistage manner can be employed. Specific examples of such methods will be described later.

The determiner 405 is realized by the CPU 101. In addition, the determiner 405 can be omitted. In the case of omitting the determiner 405, as will be described later, the changer 406 changes the conditioning parameter $\alpha$ on the basis of the number of plays by the player.

The changer 406 changes the conditioning parameter $\alpha$ memorized in the memorizer 401 on the basis of the history of the player PL or a determination result by the determiner 405.

The history of the player PL may be, for example, the number of plays, an average value of scores for each game by the player PL, or the like.

FIG. 7 illustrates the change mode of the conditioning parameter $\alpha$ in the present embodiment.

In FIG. 7, a relationship between the conditioning parameter $\alpha$ and the number of plays is illustrated. Note that the same holds true for a relationship between the conditioning parameter $\alpha$ and an average value of scores for each game by the player PL or an integrated value of scores by the player PL for the case of changing the conditioning parameter $\alpha$ on the basis of the average value of scores for each game by the player PL or the integrated value of scores by the player PL.

The conditioning parameter $\alpha$ keeps linearly decreasing until the number of plays reaches a first threshold value. Further, the conditioning parameter $\alpha$ remains at a constant value, and then, when the number of plays reaches a second threshold value, starts to linearly decrease. The conditioning parameter $\alpha$ stops decreasing upon reaching $\alpha_{min}$.

That is, in the present aspect, an experience level of a player is estimated according to the number of plays.

That is, the present aspect considers that in the case where the player PL is a beginner, the number of plays is few, whereas in the case where the player PL is an advanced player, the number of plays is great.

For this reason, in the case of a typical beginner of which the number of plays is less than the first threshold value, the conditioning parameter $\alpha$ takes a large value $\alpha_{max}$; as the number of plays is increased to get experience, the conditioning parameter $\alpha$ gradually decreases; and in the case of a typical advanced player of which the number of plays exceeds the second threshold value, the conditioning parameter $\alpha$ takes the small value $\alpha_{min}$.

Alternatively, the changer 406 may change the conditioning parameter $\alpha$ between $\alpha_{max}$ and $\alpha_{min}$ on the basis of the performance determined by the determiner 405. That is, in the case where the determiner 405 determines that the player PL is a beginner, the changer 406 may decrease the conditioning parameter $\alpha$. Also, in the case where the determiner 405 determines that the player PL is an advanced player, the changer 406 may increase the conditioning parameter $\alpha$.

The changer 406 is realized by the CPU 101.

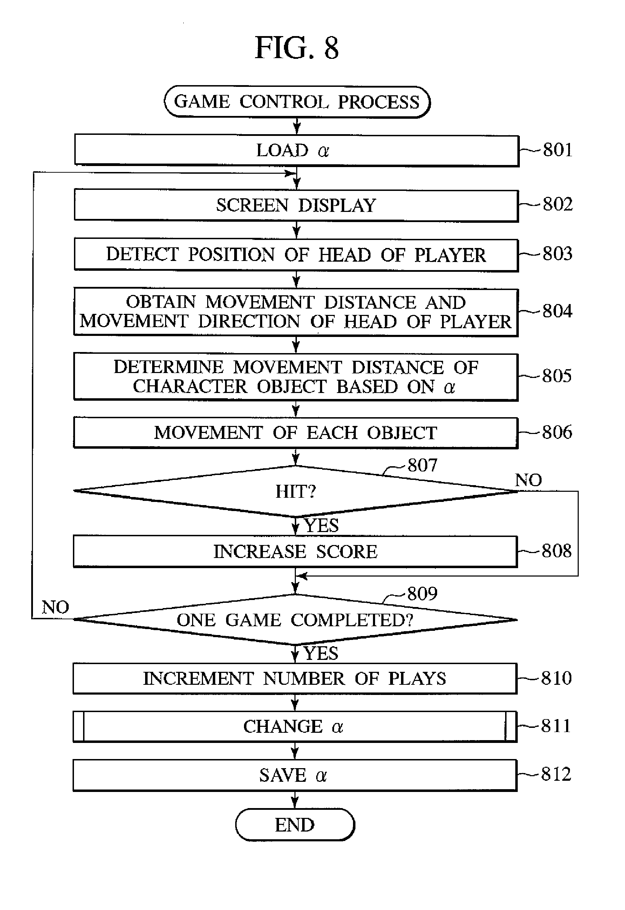

FIG. 8 illustrates a flowchart of a process performed in the game apparatus 400. In the following, with reference to the flowchart, a description is provided.

On the basis of an instruction to start the game issued by the player PL, a game program is read. The CPU 101 loads a value of the conditioning parameter $\alpha$ from the external memory 106 into the memorizer 401 (Step S801). Also, the CPU 101 loads past scores, the number of plays, and the like of the player PL from the external memory 106 into the memorizer 401.

Then, the CPU 101 collaborates with the image processor 109 to display the character object CO, target object TO, and the like on the screen (Step S802).

Subsequently, the detector 402 detects a position of the head 501 of the player PL at regular timing intervals (typically, the vertically synchronization interrupt) (Step S803).

The obtainer 403 obtains a movement distance and movement direction of the head 501 of the player PL on the basis of positions detected at the regular timing intervals (Step S804).

The mover 404 determines a movement distance $\Delta D_{vi}(t)$ of the head of the character object CO on the basis of the movement distance of the head of the player PL and the conditioning parameter $\alpha$ (Step S805). In the present embodiment, by multiplying the movement distance $\Delta D_{re}(t)$ of the head of the player PL by the conditioning parameter $\alpha$, the movement distance $\Delta D_{vi}(t)$ of the head of the character object CO is determined. Note that the movement directions of the both are parallel to each other.

The mover 404 moves the character object CO and target object TO (Step S806). In the present embodiment, as described above, the target object TO is the ball.

The CPU 101 determines whether or not the head of the character object CO and the target object TO hit against each other (Step S807). If there is an overlap part between the head of the character object CO and the target object TO, the CPU 101 determines that each hit against each other.

If the CPU 101 determines that there is the overlap part between the head of the character object CO and the target object TO (Step S807: Yes), the CPU 101 increases a score of the player PL (Step S808). Then, the CPU 101 proceeds to Step S809.

On the other hand, if the CPU 101 determines that there is no overlap part between the head of the character object CO and the target object TO (Step S807: No), the CPU 101 proceeds to Step S809.

The CPU 101 determines whether the one game has been completed (Step S809). If the CPU 101 determines that the one game has been completed (Step S809: Yes), the changer 406 increments the number of plays memorized in the memorizer 401 by one (Step S810).

Then, the changer 406 performs a change process of the conditioning parameter $\alpha$ (Step S811), and saves the conditioning parameter $\alpha$ in the external memory (Step S812). Then, the CPU 101 terminates the process.

On the other hand, if the CPU 101 determines that the one game has not been completed (Step S809: No), the CPU 101 returns to Step S802.

In the following, details of the change process of the conditioning parameter $\alpha$ (Step S811) are described with taking examples.

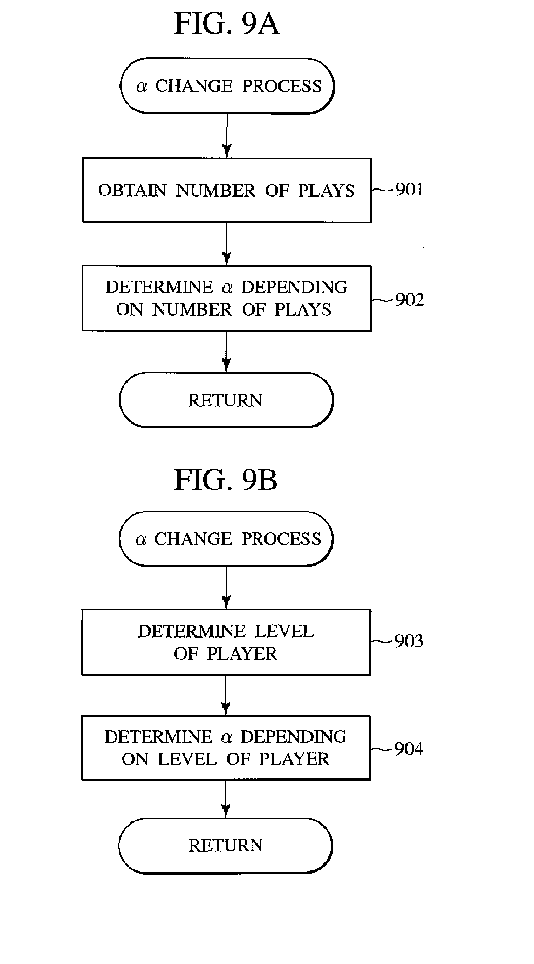

A first method has an aspect in the case where the determiner 405 is omitted. FIG. 9A illustrates the details of the change process of the conditioning parameter $\alpha$ (Step S811) in the case where the determiner 405 is omitted.

First, the CPU 101 obtains the number of plays (Step S901).

Then, the CPU 101 determines the conditioning parameter $\alpha$ on the basis of the relationship between the number of plays and the conditioning parameter $\alpha$ illustrated in FIG. 7 and the obtained number of plays (Step S902), and terminates the change process of the conditioning parameter $\alpha$.

A second method has an aspect based on a determination result by the determiner 405. FIG. 9B illustrates the details of the change process of the conditioning parameter $\alpha$ (Step S811) in the case where, on the basis of a determination result by the determiner 405, the conditioning parameter $\alpha$ is determined.

The CPU 101 that functions as the determiner 405 comprehensively determines a level of a player on the basis of a history of the player such as the number of plays or an average value of scores by the player (step S903).

Then, the conditioning parameter $\alpha$ is set to a value that is related to the determined level (Step S904), and this process is terminated.

In the above example, as the level of the player, the average score Sp of the player (or a ratio of the average score Sp to an average score $S_{all}$ of all players) is employed, and as the conditioning parameter $\alpha$, $S_p/S_{all}$ is employed.

Besides, there is also a method that classifies experience levels of players into three stages of a beginner, an average player, and an advanced player (or more stages).

That is, the method is one that, for example, classifies players into three (or more) groups according to the number of plays. Also, the method sets, among them, a group characterized by a small number of plays for beginners; a group characterized by a medium number of plays for average players; and a group characterized by a large number of plays for advanced players.

In addition, the conditioning parameter $\alpha$ is set such that, for example, for the beginners, $\alpha = 0.8$, for the average players, $\alpha = 1.0$, and for the advanced players, $\alpha = 1.2$.

As described, by classifying players into a plurality of groups that are preliminarily set according to the magnitude of some numerical value based on a play history, and setting each of numerical values preliminarily assigned to the groups as the conditioning parameter $\alpha$, the conditioning parameter $\alpha$ can be conditioned within a predefined range in a multistage manner.

According to the present embodiment, depending on a beginner or an advanced player, a level at which a motion of a player is reflected in a motion of a character can be conditioned, and therefore a difficulty level of the game can be easily conditioned.

Third embodiment

In the above embodiments, the number of players is one. However, in the present embodiment, a plurality of players can compete with one another. Each of the players blocks a ball from entering a goal as a goalkeeper, and competes on the number of kicks that the player has been able to block. In the following, the embodiment in which a plurality of players plays a game is described.

As in the second embodiment, a player is assumed to perform only heading. Also, it is assumed that the game is a competition game by two or more players. In the following, to facilitate understanding, the case of two players is described.

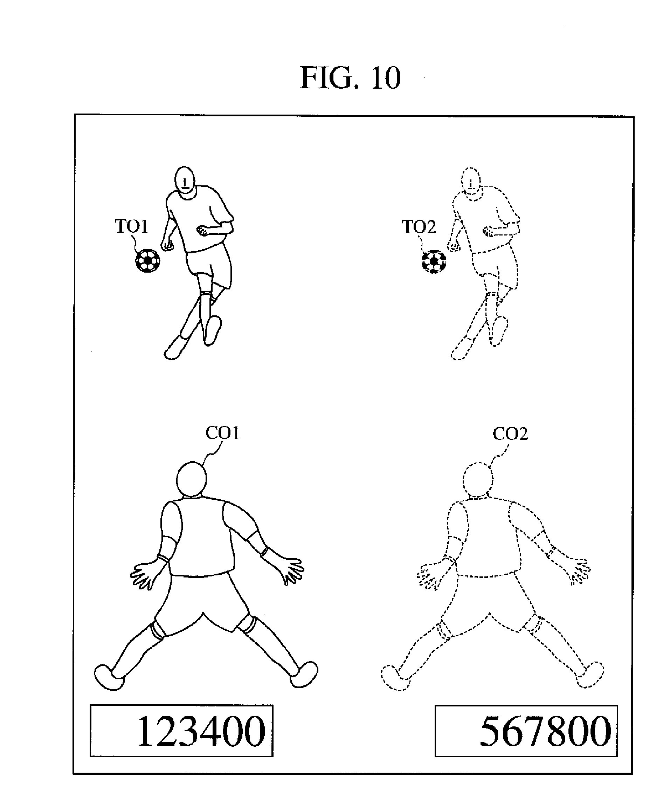

FIG. 10 illustrates an example of a game screen in the third embodiment, On the game screen, two character objects CO1 and CO2, and two target objects TO1 and TO2 are displayed. One of the two players (hereinafter referred to as a player 1) is assigned with the character object CO1 and the target object TO1, and the other one (hereinafter referred to as a player 2) is assigned with the character object CO2 and the target object TO2. In addition, it is assumed that the two players play alternately every one kick. The character object CO2 and target object TO2 assigned to the player 2 in waiting are grayed out.

In the following, the case where the player 1 plays is described in detail.

As in the above-described embodiments, the target object TO1 acting as a ball moves toward a lower part of the screen. The player 1 moves a head of the player 1 toward the target object TO1. A head of the character object CO1 moves in the same direction along with the movement of the head of the player 1 in the real space. Correction of a movement distance of the head of the character object CO1 will be described later.

The same holds true for the player 2.

A game apparatus 1100 according to the present embodiment is realized in the above-described information processor 100.

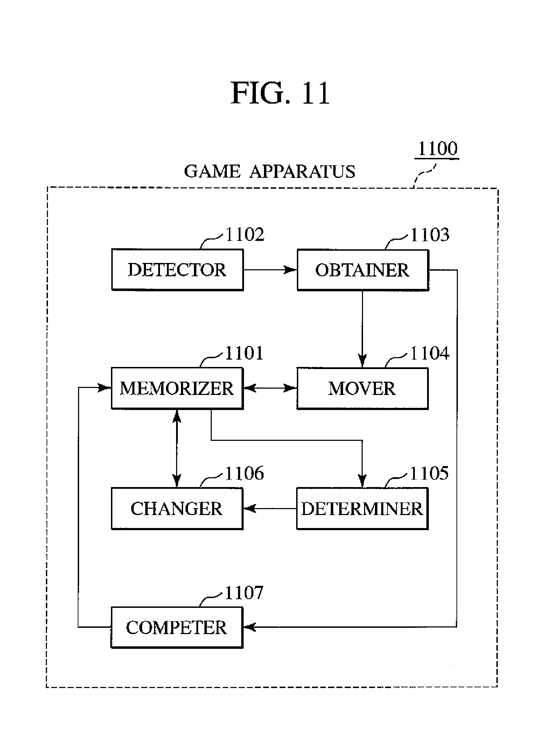

FIG. 11 is a diagram illustrating a functional configuration of the game apparatus 1100 of the present embodiment. The game apparatus 1100 is provided with a memorizer 1101, detector 1102, obtainer 1103, mover 1104, determiner 1105, changer 1106, and competer 1107.

The game apparatus 1100 according to the present embodiment is additionally provided with the competer 1107, and performs almost the same process as that performed by the game apparatus 400 of the second embodiment; however, the following points are different.

The memorizer 1101 memorizes a score of each of the players 1 and 2.

The detector 1102 recognizes faces of the players 1 and 2.

The obtainer 1103 distinguishes the players 1 and 2 from each other on the basis of the facial recognition by the detector 1102.

The mover 1104 has the same function as that in the second embodiment.

The determiner 1105 compares scores of the players 1 and 2 with each other, and distinguish between a winning player and a losing player.

The changer 1106 changes conditioning parameters for the respective players within a predefined range on the basis of the scores memorized in the memorizer 1101.

The competer 1107 makes the plurality of players repeatedly compete with each other.

The memorizer 1101 memorizes the conditioning parameter $\alpha_1$ for the player 1, conditioning parameter $\alpha_2$ for the player 2, scores of the players 1 and 2, positions of a target object and character object assigned to a player in play, and the like.

The memorizer 1101 is realized by the RAM 103, external memory 106, or the like.

The detector 1102 performs the facial recognition of the players 1 and 2 as described above. Further, as with the detector 402, the detector 1102 detects a position of a head of a player in the real space at regular timing intervals.

The detector 1102 is realized by cooperative operation of the CPU 101 and the input device 107.

The obtainer 1103 distinguishes between the players 1 and 2 on the basis of the facial recognition by the detector 1102 as described above. Also, the obtainer 1103 obtains a movement direction and a movement distance of a player in play.

The obtainer 1103 is realized by the CPU 101.

The determiner 1105 determines which score of the players 1 and 2 is higher. Note that the same process may be performed by the changer 1106.

The determiner 1105 is realized by the CPU 101.

The changer 1106 changes the conditioning parameter $\alpha_1$ for the player 1 and the conditioning parameter $\alpha_2$ for the player 2 at the end of one set on the basis of a determination result by the determiner 1105 or a result of determination made by the changer 1106 itself.

For example, when the player 1 is winning against the player 2, the changer 1106 makes the conditioning parameter $\alpha_1$ less than the conditioning parameter $\alpha_2$.

On the other hand, when the player 1 is losing to the player 2, the changer 1106 makes the conditioning parameter $\alpha_1$ greater than the conditioning parameter $\alpha_2$.

When scores of the players 1 and 2 are equal to each other, the changer 1106 sets the conditioning parameter $\alpha_1$ and the conditioning parameter $\alpha_2$ to the same value.

Note that, in the case where movement distances of the heads of the two players are equal to each other, as long as a movement distance of a head of a character object corresponding to a winning player is small relative to a movement distance of a head of a character object corresponding to a losing player, a mode of conditioning the conditioning parameters $\alpha_1$ and $\alpha_2$ at the end of one set is arbitrary.

By performing such conditioning, the winning player is required to make a larger motion than that of the losing player.

For example, in the case where one of the players is an advanced player, and the other one is a beginner, conventionally, the advanced player is familiar with the game, and therefore a motion is typically small. On the other hand, the beginner is not familiar with the game, and therefore makes many useless movements and a large motion.

However, in the present embodiment, a more advanced player should make a larger motion. For this reason, both of the beginner and the advanced player will largely and strenuously move bodies.

Accordingly, even if there is a difference in real ability between the players, both of the players largely move bodies, and therefore the game can be heatedly developed.

In the present embodiment, the changer 1106 is realized by the CPU 101.

The competer 1107 makes the players 1 and 2 compete with each other. In the present embodiment, every time one kick is completed, the competer 1107 determines whether or not the both of the players have played.

In the present embodiment, the competer 1107 is realized by the CPU 101. In the following, situations of motions of the two players PL1 and PL2 in the real space, and situations of motions of the character objects CO1 and CO2 in the game space, which respectively corresponds to the two players, are described.

Also, as described above, the motions of the players PL1 and PL2 are regularly obtained. In the present embodiment, the motions are obtained every one period of the vertical synchronization interrupt.

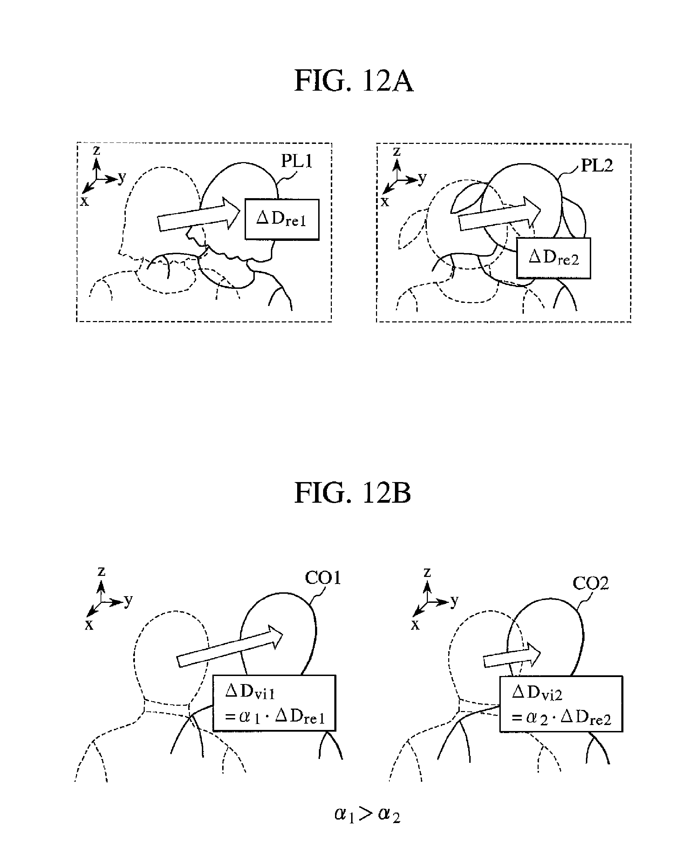

FIG. 12A is an explanatory diagram illustrating the situations of the motions of the two players PL1 and PL2 in the real space.

As illustrated in the diagram, in the real space, the head of the player PL1 has moved by the magnitude $\Delta D_{re1}$ of a displacement vector.

On the other hand, the head of the player PL2 has moved by the magnitude $\Delta D_{re2}$ of a displacement vector.

In an example illustrated in the diagram, the magnitude $\Delta D_{re1}$ of the displacement vector of the head of the player PL1 and the magnitude $\Delta D_{re2}$ of the displacement vector of the head of the player PL2 are equal to each other.

Now, consider an example where as a result of performance determination in the middle of the game, the player PL1 is losing and the player PL2 is winning. In response to this, the changer 1106 makes the conditioning parameter $\alpha_1$ for the player PL1 greater than the conditioning parameter $\alpha_2$ for the player PL2.

FIG. 12B is an explanatory diagram illustrating the situations of the motions of the character objects CO1 and CO2 in the game space, which respectively corresponds to the two players PL1 and PL2.

As illustrated in the diagram, in the game space, the head of the character object CO1 has moved by the magnitude $\Delta D_{vi1}$ of a displacement vector.

On the other hand, the head of the character object CO2 has moved by the magnitude $\Delta D_{vi2}$ of a displacement vector.

In the present embodiment, as in the second embodiment, the obtainer 1103 obtains a displacement vector of a head of a character object in the virtual space by multiplying a displacement vector of a head of a player in the real space by a conditioning parameter.

As illustrated in FIG. 12A, the magnitude $\Delta D_{re1}$ of the displacement vector of the head of the player PL1 and the magnitude $\Delta D_{re2}$ of the displacement vector of the head of the player PL2 are equal to each other. Also, by the changer 1106, the conditioning parameter $\alpha_1$ for the player PL1 is set greater than the conditioning parameter $\alpha_2$ for the player PL2.

For this reason, as illustrated in FIG. 12B, a distance $\Delta D_{vi1}$ the mover 1104 moves the head of the character object CO1 is greater than a distance $\Delta D_{vi2}$ the mover 1104 moves the head of the character object CO2.

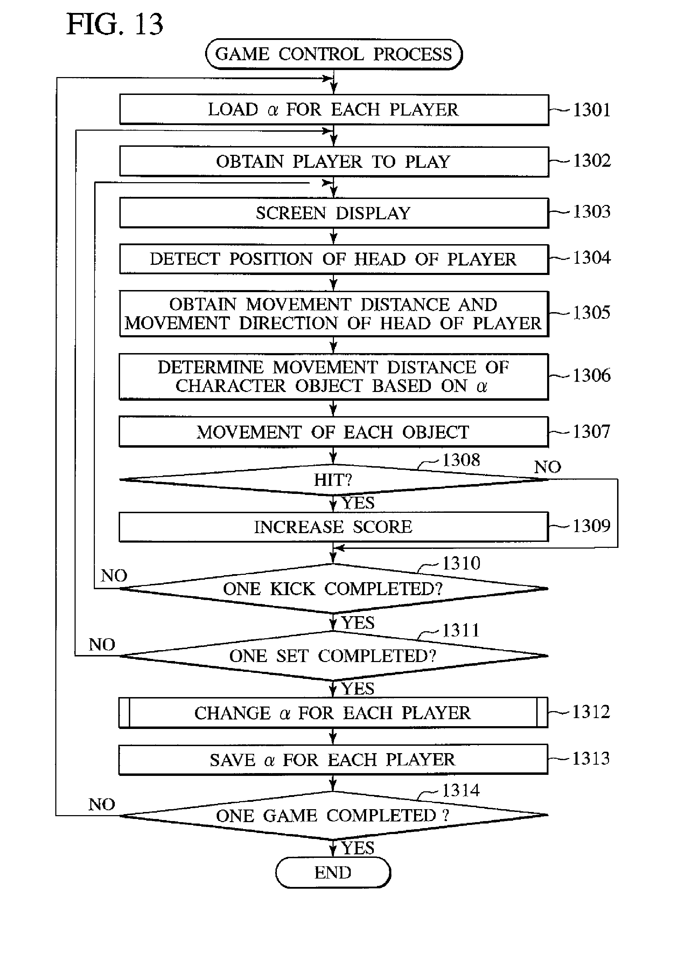

In the following, a process performed by each of the above parts of the game apparatus 1100 is described with use of a flowchart illustrated in FIG. 13.

First, the CPU 101 loads the conditioning parameter $\alpha_1$ for the player PL1 and the conditioning parameter $\alpha_2$ for the player PL2 from the external memory 106 into the RAM 103 (Step S1301).

On the basis of the facial recognition by the detector 1102, the obtainer 1103 obtains which of the players PL1 and PL2 is a player to play (Step S 1302).

Steps S1303 to 1310 are the same processing steps as Steps S802 to S809 in FIG. 8 in the second embodiment, and therefore description thereof is omitted.

The computer 1107 determines whether or not one set has been completed (Step S 1311). If the one set has been completed (Step S 1311: Yes), the changer 1106 changes the conditioning parameter $\alpha_1$ for the player 1 and the conditioning parameter $\alpha_2$ for the player 2 (Step S1312). Then, the changer 1106 saves the conditioning parameters for the respective players in the external memory 106 (Step S1313). Subsequently, the CPU 101 determines whether or not to terminate the game (Step S1314).

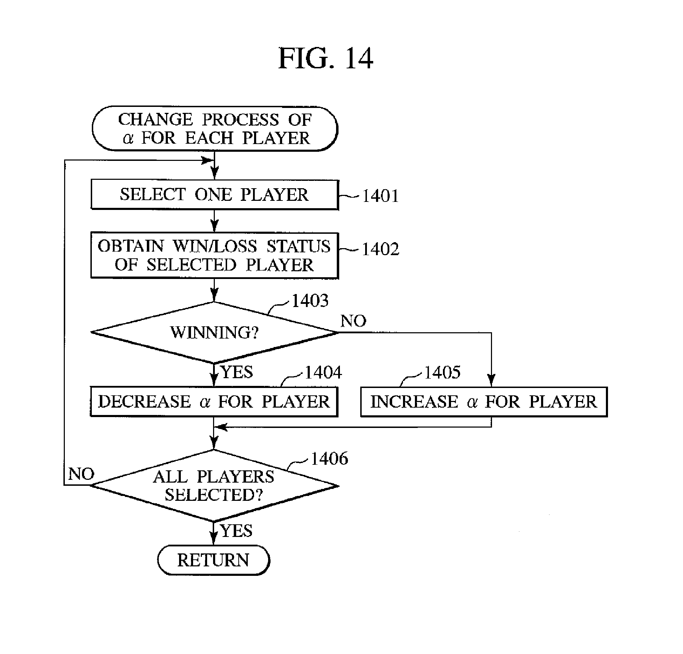

Details of a process of changing the conditioning parameter $\alpha_1$ for the player 1 and the conditioning parameter $\alpha_2$ for the player 2 are illustrated in FIG. 14. First, the CPU 101 selects one of the players (Step S1401).

Then, the CPU 101 obtains win/loss status of the selected player (Step S1402) to determine whether or not the player is winning (Step S 1403).

If the selected player is winning (Step S1403: Yes), the CPU 101 decreases a conditioning parameter for the selected player (Step S 1404), and proceeds to Step S 1406. On the other hand, if the selected player is losing (Step S1403: No), the CPU 101 increases the conditioning parameter for the selected player (Step S 1405), and proceeds to Step S 1406.

In Step S 1406, the CPU 101 determines whether or not all of the players have been selected. If all of the players have been selected (Step S 1406: Yes), the CPU 101 terminates the process of changing the conditioning parameter $\alpha_1$ and the conditioning parameter $\alpha_2$. On the other hand, if any unselected player remains (Step S1406: No), the CPU 101 returns to Step S1401.

Returning to FIG. 13, if the CPU 101 determines not to terminate the game (Step S1314: No), the CPU 101 returns to Step S1301. On the other hand, if determining to terminate the game (Step S1314: Yes), the CPU 101 terminates the game.

If the one set has not been completed (Step S 1311: No), the CPU 101 returns to Step S1302.

According to the present embodiment, by, depending on a performance of the game currently in play, making a level at which a motion of a winning player is reflected in a motion of a character in the game less than a level at which a motion of a losing player is reflected in a motion of a character in the game to thereby handicap the winning player, difficulty levels for the respective players of the game in progress can be conditioned to make the competition balanced, and thereby the game can be made more intense.

In addition, it is not that the two or more players alternately play, but there may be employed an aspect in which, on a screen, character objects and target objects of which the numbers are equal to the number of players are displayed, and the players simultaneously play.

Also, the plurality of players may split into a kicker and a goalkeeper. In this case, on a basis of a detected motion of a leg of the kicker, a movement path of a target object acting as a ball is determined.

(Variations)

The present invention is not limited to any of the above-described embodiments, but can be variously modified.

For example, in the first and second embodiments, the conditioning parameter $\alpha$ keeps linearly decreasing until the number of plays reaches the first threshold value; remains at the constant value; then, when the number of plays reaches the second threshold value, starts to linearly decrease; and when reaching $\alpha_{min}$, stops decreasing. However, the change mode of the conditioning parameter $\alpha$ is not limited to this.

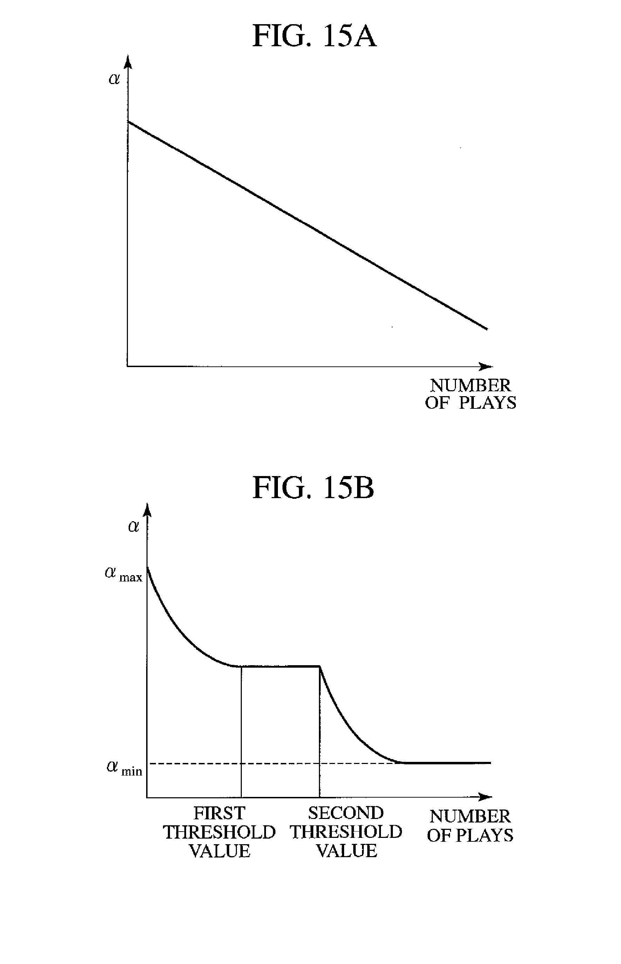

In FIG. 15A, the conditioning parameter $\alpha$ and the number of plays have a negative proportional relationship. As the number of plays is increased, the conditioning parameter $\alpha$ decreases. That is, as a play experience level is increased, the magnitude $\Delta D_{vi}(t)$ of the displacement vector of the character object CO in the virtual space decreases.

In FIG. 15B, the conditioning parameter $\alpha$ keeps decreasing in a quadratic curve manner until the number of plays reaches a first threshold value. Further, the conditioning parameter $\alpha$ remains at a constant value, and then, when the number of plays reaches a second threshold value, starts to decrease in the quadratic curve manner. The conditioning parameter $\alpha$ stops decreasing when reaching $\alpha_{min}$.

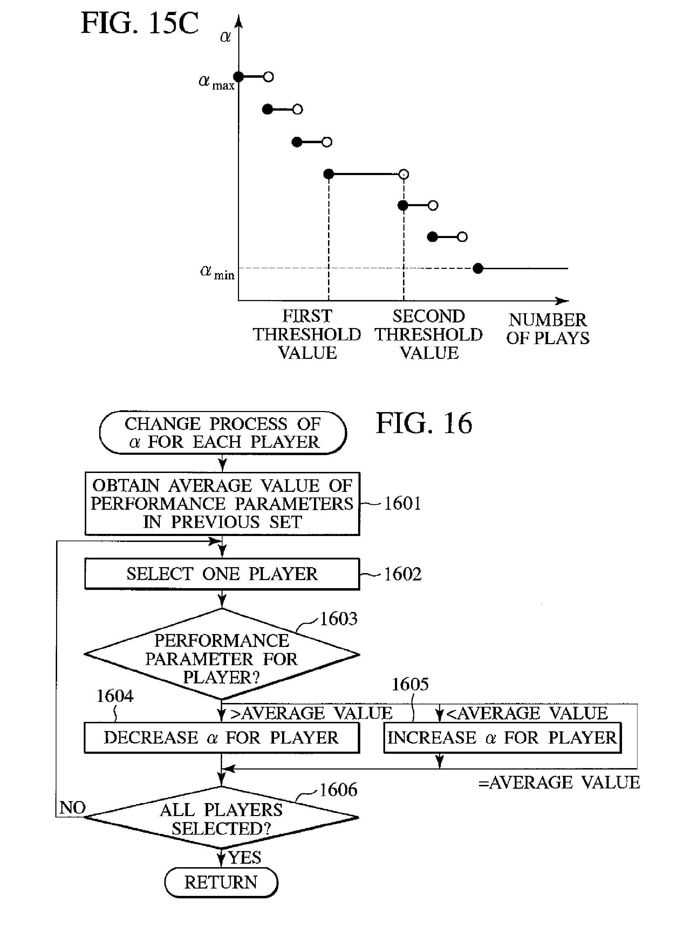

In FIG.15C, the conditioning parameter $\alpha$ discretely changes with respect to the number of plays. The conditioning parameter $\alpha$ keeps decreasing until the number of plays reaches a first threshold value. Further, the conditioning parameter $\alpha$ remains at a constant value, and then, when the number of plays reaches a second threshold value, starts to decrease. The conditioning parameter $\alpha$ stops decreasing when reaching $\alpha_{min}$.

Note that the change mode of the conditioning parameter $\alpha$ in the present invention is not limited to any of the examples illustrated in FIGS. 15A to 15C, but is arbitrary.

Also, the process of changing the conditioning parameters $\alpha$ described in the third embodiment may have an aspect illustrated in a flowchart of FIG. 16 if the number of players is three or more. In the following, with reference to FIG. 16, a description is provided.

First, the CPU 101 obtains an average value of performance parameters in a previous set (Step S1601).

Then, the CPU 101 selects one of players (Step S1602) to determine a magnitude relationship between a performance parameter for the selected player and the average value (Step S1603).

If the performance parameter for the selected player is greater than the average value (Step S1603: > Average value), the CPU 101 decreases the conditioning parameter $\alpha$ for the selected player (Step S1604), and proceeds to Step S1606.

On the other hand, if the performance parameter for the selected player is less than the average value (Step S1603: < Average value), the CPU 101 increases the conditioning parameter $\alpha$ for the selected player (Step S1605), and proceeds to Step S1606.

Also, if the performance parameter for the selected player is equal to the average value (Step S1603: = Average value), the CPU 101 proceeds to Step S1606 without changing the conditioning parameter $\alpha$ for the player.

In addition, typically, in Step S1603, if a difference between the performance parameter and the average value is within a predefined error range, the both are determined to be equal to each other.

In Step S1606, the CPU 101 determines whether or not all of the players have been selected. If all of the players have been selected (Step S1606: Yes), the CPU 101 terminates the process of changing the conditioning parameters $\alpha$ for the respective players. On the other hand, if any unselected player remains (Step S1606: No), the CPU 101 returns to Step S1602.

The present invention is not limited to any of the above-described embodiments and variations, but can be variously modified and applied. Also, the respective configuration components of the above-described embodiments can also be freely combined.

As all or part of the above-described game apparatus 400 or 1100, a program for operating a computer may be stored in a computer-readable recording medium such as a memory card, CD-ROM, DVD, MO (Magnet Optical disk) or the like and delivered; installed on another computer; and operated as the above-described means, or made to perform the above-described steps.

Further, the program may be stored in a disk device or the like that a server device on the Internet has; for example, superimposed on a carrier wave; and subjected to download or the like into a computer.

## INDUSTRIAL APPLICABILITY

As described above, according to the present invention, a game apparatus, control method for the game apparatus, information recording medium, and program that can, on the basis of a game history of a player, condition an amount for the player to move a body part of the player can be provided.

Having described and illustrated the principles of this application by reference to one or more preferred embodiments, it should be apparent that the preferred embodiments may be modified in arrangement and detail without departing from the principles disclosed herein and that it is intended that the application be construed as including all such modifications and variations insofar as they come within the spirit and scope of the subject matter disclosed herein.

**Claims**

1. A game apparatus that provides a game that moves an object arranged in a virtual space, the game apparatus **characterized by** comprising:

   an acceptor that accepts a position of a predefined body part of a player in a real space;
   an obtainer that, from the accepted position, obtains a movement direction and a movement distance of the predefined body part;
   a mover that, on a basis of the obtained movement distance, a conditioning parameter for the object, and a position of the object in the virtual space, moves the object in the movement direction; and
   a changer that changes the conditioning parameter for the object depending on a history of the player.

2. The game apparatus according to claim 1, further **characterized by**
   a memorizer that memorizes the conditioning parameter for the object and the position of the object; and
   a detector that detects the position of the predefined body part of the player in the real space, wherein
   the acceptor accepts the position detected by the detector.

3. The game apparatus according to claim 1, **characterized in that**
   the mover determines a movement distance of the object in the virtual space by multiplying the movement distance by the conditioning parameter.

4. The game apparatus according to claim 1, **characterized by**
   a determiner that determines a performance of the player on a basis of the history, wherein
   the changer changes the conditioning parameter on a basis of the determined performance.

5. The game apparatus according to claim 2, **characterized in that**
   the memorizer memorizes a performance parameter for each of a plurality of players; and
   the changer changes the conditioning parameter for each of the players on a basis of the performance parameter memorized in the memorizer.

6. A control method that is performed by a game apparatus that provides a game that moves an object arranged in a virtual space, the control method **characterized by** comprising
   an accepting step of accepting a position of a predefined body part of a player in a real space;
   an obtaining step of, from the accepted position, obtaining a movement direction and a movement distance of the predefined body part;
   a movement step of, on a basis of the obtained movement distance, a conditioning parameter for the object, and a position of the object in the virtual space, moving the object in the movement direction; and
   a changing step of changing the conditioning parameter for the object depending on a history of the player.

7. A non-transitory information recording medium that records a program for instructing a computer to provide a game that moves an object arranged in a virtual space, wherein
   the program instructs the computer to function as:

   an acceptor that accepts a position of a predefined body part of a player in a real space;
   an obtainer that, from the accepted position, obtains a movement direction and a movement distance of the predefined body part;
   a mover that, on a basis of the obtained movement distance, a conditioning parameter for the object, and a position of the object in the virtual space, moves the object in the movement direction; and
   a changer that changes the conditioning parameter for the object depending on a history of the player.

8. A program for instructing a computer to provide a game that moves an object arranged in a virtual space, the program being recorded in a non-transitory information recording medium and instructing the computer to function as:

   an acceptor that accepts a position of a predefined body part of a player in a real space;
   an obtainer that, from the accepted position, obtains a movement direction and a movement distance of the predefined body part;
   a mover that, on a basis of the obtained movement distance, a conditioning parameter for the object, and a position of the object in the virtual space, moves the object in the movement direction; and

a changer that changes the conditioning parameter for the object depending on a history of the player.

# FIG. 1

10

POSITION OF
PREDEFINED PART OF
PLAYER IN REAL WORLD

GAME HISTORY
OF PLAYER

15

| ACCEPTOR |

| MOVER |

12

13

| DETECTOR |

CONDITIONING
PARAMETER

MOVEMENT DIRECTION &
MOVEMENT DISTANCE

14

| OBTAINER |

POSITION OF
OBJECT IN
VIRTUAL WORLD

# FIG. 2A

<u>100</u>

```
┌─────────────────────────────────────────────────┐
│  101                        107                  │
│  ┌──────────┐              ┌──────────────────┐  │
│  │   CPU    │              │  INPUT  DEVICE   │  │
│  └──────────┘              └──────────────────┘  │
│  102                        108                  │
│  ┌──────────┐              ┌──────────────────┐  │
│  │   ROM    │              │  DVD-ROM  DRIVE  │  │
│  └──────────┘              └──────────────────┘  │
│  103                        109                  │
│  ┌──────────┐              ┌──────────────────┐  │
│  │   RAM    │              │ IMAGE PROCESSOR  │──┼──► MONITOR
│  └──────────┘              └──────────────────┘  │
│  104                        110                  │
│  ┌──────────┐              ┌──────────────────┐  │
│  │HARD DISK │              │ SOUND PROCESSOR  │──┼──► SPEAKER
│  └──────────┘              └──────────────────┘  │
│  105                        111                  │
│  ┌──────────┐              ┌──────────────────┐  │
│  │INTERFACE │              │       NIC        │  │
│  └──────────┘              └──────────────────┘  │
│  ┌──────────┐                     │              │
│  │ EXTERNAL │                     │              │
│  │  MEMORY  │                     │              │
│  └──────────┘                     │              │
│         └─106                     │              │
└───────────────────────────────────┼──────────────┘
                                    │
                               INTERNET
```

# FIG. 2B

## FIG. 3

# FIG. 4

GAME APPARATUS <u>400</u>

```
          402                         403
    ┌──────────────┐           ┌──────────────┐
    │   DETECTOR   │──────────▶│   OBTAINER   │
    └──────────────┘           └──────────────┘
                                       │
                                       ▼
          401                         404
    ┌──────────────┐           ┌──────────────┐
    │  MEMORIZER   │◀─────────▶│    MOVER     │
    └──────────────┘           └──────────────┘
         ▲   │
         │   │
         ▼   │
          406                         405
    ┌──────────────┐           ┌──────────────┐
    │   CHANGER    │◀──────────│  DETERMINER  │
    └──────────────┘           └──────────────┘
```

# FIG. 5

# FIG. 6A

# FIG. 6B

# FIG. 6C

CO

$$\Delta D_{vi}(t) = \alpha \cdot \Delta D_{re}(t)$$

$\alpha < 1.0$

# FIG. 7

$\alpha$

$\alpha_{max}$

$\alpha_{min}$

FIRST THRESHOLD VALUE

SECOND THRESHOLD VALUE

NUMBER OF PLAYS

# FIG. 8

GAME CONTROL PROCESS

LOAD $\alpha$ —801

SCREEN DISPLAY —802

DETECT POSITION OF HEAD OF PLAYER —803

OBTAIN MOVEMENT DISTANCE AND MOVEMENT DIRECTION OF HEAD OF PLAYER —804

DETERMINE MOVEMENT DISTANCE OF CHARACTER OBJECT BASED ON $\alpha$ —805

MOVEMENT OF EACH OBJECT —806

HIT? —807    NO

YES

INCREASE SCORE —808

ONE GAME COMPLETED? —809    NO

YES

INCREMENT NUMBER OF PLAYS —810

CHANGE $\alpha$ —811

SAVE $\alpha$ —812

END

# FIG. 9A

```
       ┌──────────────────┐
       │  α CHANGE PROCESS │
       └──────────────────┘
                │
                ▼
   ┌───────────────────────────┐
   │   OBTAIN NUMBER OF PLAYS   │──901
   └───────────────────────────┘
                │
                ▼
   ┌───────────────────────────┐
   │   DETERMINE α DEPENDING    │
   │     ON NUMBER OF PLAYS     │──902
   └───────────────────────────┘
                │
                ▼
          ┌──────────┐
          │  RETURN  │
          └──────────┘
```

# FIG. 9B

```
       ┌──────────────────┐
       │  α CHANGE PROCESS │
       └──────────────────┘
                │
                ▼
   ┌───────────────────────────┐
   │     DETERMINE LEVEL        │
   │        OF PLAYER           │──903
   └───────────────────────────┘
                │
                ▼
   ┌───────────────────────────┐
   │   DETERMINE α DEPENDING    │
   │     ON LEVEL OF PLAYER     │──904
   └───────────────────────────┘
                │
                ▼
          ┌──────────┐
          │  RETURN  │
          └──────────┘
```

## FIG. 10

# FIG. 11

GAME APPARATUS 1100

# FIG. 12A

PL1

$\Delta D_{re1}$

PL2

$\Delta D_{re2}$

# FIG. 12B

CO1

$\Delta D_{vi1} = \alpha_1 \cdot \Delta D_{re1}$

CO2

$\Delta D_{vi2} = \alpha_2 \cdot \Delta D_{re2}$

$\alpha_1 > \alpha_2$

# FIG. 13

```
                    ( GAME  CONTROL  PROCESS )
                              │
                              ▼
          ┌───────────────────────────────────┐
          │      LOAD α FOR EACH PLAYER        │──1301
          └───────────────────────────────────┘
                              │
                              ▼
          ┌───────────────────────────────────┐
          │       OBTAIN  PLAYER  TO  PLAY     │──1302
          └───────────────────────────────────┘
                              │
                              ▼
          ┌───────────────────────────────────┐
          │         SCREEN  DISPLAY           │──1303
          └───────────────────────────────────┘
                              │
                              ▼
          ┌───────────────────────────────────┐
          │  DETECT POSITION OF HEAD OF PLAYER │──1304
          └───────────────────────────────────┘
                              │
                              ▼
          ┌───────────────────────────────────┐
          │  OBTAIN MOVEMENT DISTANCE AND      │──1305
          │  MOVEMENT DIRECTION OF HEAD OF PLAYER │
          └───────────────────────────────────┘
                              │
                              ▼
          ┌───────────────────────────────────┐
          │  DETERMINE MOVEMENT DISTANCE OF    │──1306
          │  CHARACTER OBJECT BASED ON α       │
          └───────────────────────────────────┘
                              │
                              ▼
          ┌───────────────────────────────────┐
          │     MOVEMENT  OF  EACH  OBJECT     │──1307
          └───────────────────────────────────┘
                              │
                              ▼
                   ◇───1308──────── NO
                   HIT?
                    │ YES
                    ▼
          ┌───────────────────────────────────┐
          │         INCREASE  SCORE           │──1309
          └───────────────────────────────────┘
                              │
                              ▼
          NO   ◇───1310───
               ONE KICK COMPLETED?
                    │ YES
                    ▼
          NO   ◇───1311───
               ONE SET COMPLETED?
                    │ YES
                    ▼
          ┌───────────────────────────────────┐
          │     CHANGE α FOR EACH PLAYER      │──1312
          └───────────────────────────────────┘
                              │
                              ▼
          ┌───────────────────────────────────┐
          │      SAVE α FOR EACH PLAYER       │──1313
          └───────────────────────────────────┘
                              │
                              ▼
          NO   ◇───1314───
               ONE GAME COMPLETED ?
                    │ YES
                    ▼
                 (  END  )
```

# FIG. 14

```
        ┌─────────────────────────┐
        │  CHANGE  PROCESS  OF    │
        │  α FOR  EACH  PLAYER    │
        └─────────────────────────┘
                    │
      ┌─────────────▼──────────────┐
      │    SELECT  ONE  PLAYER     │── 1401
      └─────────────┬──────────────┘
                    │
      ┌─────────────▼──────────────┐
      │  OBTAIN  WIN/LOSS  STATUS  │── 1402
      │   OF  SELECTED  PLAYER     │
      └─────────────┬──────────────┘
                    │         ╱1403
              ╱─────▼─────╲          NO
             ╱   WINNING?  ╲─────────────────┐
             ╲             ╱                 │
              ╲─────┬─────╱                  │
               YES  │  ╱1404          ╱1405  ▼
      ┌─────────────▼──────────┐  ┌──────────────────────────┐
      │ DECREASE α FOR PLAYER  │  │  INCREASE α FOR PLAYER   │
      └─────────────┬──────────┘  └──────────┬───────────────┘
                    │◄───────────────────────┘
                    │          ╱1406
    NO        ╱─────▼─────╲
   ┌──────────  ALL PLAYERS │
   │          ╲  SELECTED? ╱
   │           ╲─────┬────╱
   │             YES │
   │        ┌────────▼────────┐
   │        │     RETURN      │
   │        └─────────────────┘
```

# FIG. 15A

$\alpha$

NUMBER
OF PLAYS

# FIG. 15B

$\alpha$

$\alpha_{max}$

$\alpha_{min}$

FIRST
THRESHOLD
VALUE

SECOND
THRESHOLD
VALUE

NUMBER
OF PLAYS

# FIG. 15C

FIRST THRESHOLD VALUE    SECOND THRESHOLD VALUE    NUMBER OF PLAYS

# FIG. 16

CHANGE PROCESS OF $\alpha$ FOR EACH PLAYER

OBTAIN AVERAGE VALUE OF PERFORMANCE PARAMETERS IN PREVIOUS SET — 1601

SELECT ONE PLAYER — 1602

PERFORMANCE PARAMETER FOR PLAYER? — 1603

1604 — >AVERAGE VALUE
DECREASE $\alpha$ FOR PLAYER

1605 — <AVERAGE VALUE
INCREASE $\alpha$ FOR PLAYER

=AVERAGE VALUE

ALL PLAYERS SELECTED? — 1606
NO

YES

RETURN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010088563 A